(19) Europäisches Patentamt / European Patent Office / Office européen des brevets

(11) **EP 4 611 071 A1**

(12) **EUROPEAN PATENT APPLICATION**
published in accordance with Art. 153(4) EPC

(43) Date of publication:
**03.09.2025 Bulletin 2025/36**

(21) Application number: **23888825.9**

(22) Date of filing: **16.05.2023**

(51) International Patent Classification (IPC):
$H01M\ 4/525^{(2010.01)}$  $H01M\ 4/131^{(2010.01)}$
$H01M\ 4/505^{(2010.01)}$  $H01M\ 10/052^{(2010.01)}$
$H01M\ 4/02^{(2006.01)}$

(52) Cooperative Patent Classification (CPC):
**H01M 4/02; H01M 4/131; H01M 4/505;**
**H01M 4/525; H01M 10/052;** Y02E 60/10

(86) International application number:
**PCT/KR2023/006615**

(87) International publication number:
**WO 2024/101556 (16.05.2024 Gazette 2024/20)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **10.11.2022 KR 20220149660**

(71) Applicants:
• **SK On Co., Ltd.**
  **Seoul 03161 (KR)**
• **SK innovation Co., Ltd.**
  **Seoul 03188 (KR)**

(72) Inventors:
• **JANG, Ji Hye**
  **Daejeon 34124 (KR)**

• **PARK, Sang Min**
  **Daejeon 34124 (KR)**
• **KIM, Sang Bok**
  **Daejeon 34124 (KR)**
• **KIM, Ji Seon**
  **Daejeon 34124 (KR)**
• **YOON, Jeong Bae**
  **Daejeon 34124 (KR)**
• **CHOI, Je Nam**
  **Daejeon 34124 (KR)**
• **KIM, Eun Hyo**
  **Daejeon 34124 (KR)**
• **CHOI, Wan Uk**
  **Daejeon 34124 (KR)**

(74) Representative: **Prüfer & Partner mbB**
**Patentanwälte · Rechtsanwälte**
**Sohnckestraße 12**
**81479 München (DE)**

(54) **CATHODE FOR LITHIUM SECONDARY BATTERY, AND LITHIUM SECONDARY BATTERY COMPRISING SAME**

(57)    A cathode for a lithium secondary battery according to exemplary embodiments includes a lithium metal oxide containing nickel and having a strain (Q) that satisfies a predetermined relationship. The strain is a maximum value among lattice strains measured within a predetermined voltage range, and the lattice strains may be calculated from an XRD profile of the cathode. The present disclosure may provide a cathode exhibiting improved structural stability, high-temperature stability and cycle characteristics, as well as enhanced high-capacity and high-power characteristics.

[FIG. 1]

## Description

[Technical Field]

The present disclosure relates to a cathode for a lithium secondary battery and a lithium secondary battery including the same. More specifically, the present disclosure relates to a cathode for a lithium secondary battery which includes a transition metal oxide, and a lithium secondary battery including the cathode.

[Background Art]

A secondary battery is a battery that can be repeatedly charged and discharged. With rapid progress of information and communication technology and display industries, the secondary battery has been widely applied to various portable electronic telecommunication devices such as a camcorder, a mobile phone, a laptop computer, etc. as their power sources. Recently, a battery pack including the secondary battery has also been developed and applied to eco-friendly automobiles such as a hybrid vehicle as a power source thereof.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design, such that development thereof is progressing in this regard.

For example, the lithium secondary battery may include: an electrode assembly including a cathode, an anode, and a separation membrane (separator); and an electrolyte in which the electrode assembly is impregnated. The lithium secondary battery may further include, for example, a pouch-type outer case in which the electrode assembly and the electrolyte are housed.

A lithium metal oxide may be used as a cathode active material of the lithium secondary battery. As the application scope of lithium secondary batteries continues to expand, longer cycle life, high capacity and higher energy density are required. However, when the energy density, capacity, and output of the lithium metal oxide are increased, the stability and capacity retention rate of the lithium metal oxide may be reduced.

For example, Korean Patent Laid-Open Publication No. 10-2017-0093085 discloses a cathode active material including a transition metal compound.

[Summary of Invention]

[Problems to be Solved by Invention]

An object of the present disclosure is to provide a cathode for a lithium secondary battery with improved energy density and stability.

Another object of the present disclosure is to provide a lithium secondary battery with improved energy density and stability.

[Means for Solving Problems]

A cathode for a lithium secondary battery according to exemplary embodiments may include: a lithium metal oxide containing x moles of nickel (Ni) per 1 mole based on a total metal excluding lithium, wherein the lithium metal oxide may have a strain (Q) defined by Equation 1 below:

[Equation 1]

$$11.5x\text{-}7.9 \leq Q \leq 11.5x\text{-}7.5$$

In Equation 1 above, x may represent a content of the nickel, Q may represent the maximum value among lattice strains measured according to voltage within a voltage range of 3.0 V to 4.3 V for a half-cell including the cathode for a lithium secondary battery and a lithium counter electrode.

Each of the lattice strains may be 1/4 of the slope of a straight line obtained by plotting a diffraction angle $\theta$ (rad) and a full width at half maximum $\beta$ (rad) of XRD peaks of the lithium metal oxide, obtained by XRD analysis at each measurement voltage, on a coordinate plane having a horizontal axis of $\sin\theta$ and a vertical axis of $\beta\cos\theta$.

In some embodiments, each of the lattice strains may be calculated using Equation 2 below:

$$\text{[Equation 2]}$$

$$\beta\cos\theta = 4\eta\sin\theta + 0.9\lambda/D$$

In Equation 2 above, $\beta$ may represent the full width at half maximum of the XRD peak, $\theta$ may represent the diffraction angle of the XRD peak, $\eta$ may represent the lattice strain (dimensionless), $\lambda$ may represent an X-ray wavelength (Å) used for XRD analysis, and D may represent a crystallite size (Å) of the lithium metal oxide.

In some embodiments, the content (x) of nickel in the lithium metal oxide may be 0.8 mol or more per 1 mole based on the total metal excluding lithium.

In some embodiments, the lithium metal oxide may be represented by Formula 1 below:

$$\text{[Formula 1]} \qquad Li_aNi_xM_bO_2$$

In Formula 1 above, x a and b may satisfy $0.8 \leq x \leq 0.94$, $0.95 \leq a \leq 1.05$ and $0.06 < b \leq 0.2$, and M may be at least one selected from the group consisting of B, Al, Ti, V, Mn, Co, Zn, Y, Nb, Zr, Mo, Sn, Mg, Sr, Ba and W.

In some embodiments, in Formula 1 above, a molar ratio (x) of lithium may be in a range of 0.83 to 0.94.

In some embodiments, the lattice strains may be measured at a time resolution of 12.5 min/scan within the voltage range of 3.0 V to 4.3 V.

In some embodiments, the maximum value (Q) of the lattice strains may be measured at a voltage of less than 4.3 V.

In some embodiments, the maximum value (Q) of the lattice strains may be measured at a voltage of 4.0 V or more and less than 4.3 V.

In some embodiments, the lattice strains may be measured while charging or discharging the half-cell at a C-rate of 0.1C within a voltage range of 3.0 V to 4.3 V.

In some embodiments, each of the lattice strains may be obtained by plotting the diffraction angle ($\theta$) and the full width at half maximum ($\beta$) of all XRD peaks appearing in the $2\theta$ ranges of 15° to 20°, 35° to 40°, 45° to 50°, 55° to 60°, and 65° to 70° on the coordinate plane.

In some embodiments, each of the lattice strains may be obtained by plotting the diffraction angle ($\theta$) and the full width at half maximum ($\beta$) of all XRD peaks of (003), (101), (105), (107) and (113) planes of the lithium metal oxide on the coordinate plane.

In some embodiments, the lithium metal oxide may have a layered crystal structure belonging to an R-3m space group.

In some embodiments, the lithium metal oxide may further include cobalt (Co) and manganese (Mn).

A lithium secondary battery according to exemplary embodiments includes: the above-described cathode for a lithium secondary battery; and an anode disposed opposite to the cathode.

[Advantageous effects]

The cathode for a lithium secondary battery according to exemplary embodiments includes a lithium metal oxide containing nickel, and the concentration of nickel and the strain value of the cathode have a predetermined relationship. Accordingly, a lithium secondary battery having high structural stability and thermal stability without degrading output and capacity may be provided.

The strain value of the cathode may be calculated as the maximum value among lattice strains according to voltage. Accordingly, the change in the lattice structure of the cathode depending on the voltage section may be reduced, and the structural collapse and gas generation of the cathode during charging and discharging may be prevented.

Lattice strains may be measured by XRD analysis while charging or discharging a half-cell. Therefore, lattice or crystal strain occurring during charging or discharging may be predicted, and by controlling the strain value obtained therefrom, the operational stability of a lithium secondary battery may be improved within the overall operating voltage range.

[Brief Description of Drawings]

FIGS. 1 and 2 are schematic plan and cross-sectional views illustrating a lithium secondary battery according to exemplary embodiments, respectively.

FIG. 3 is a graph illustrating an XRD profile of a cathode prepared according to Example 2.

FIG. 4 is a graph illustrating a plot according to Equation 2 of the cathode prepared according to Example 2.

FIG. 5 is a graph illustrating crystal size and lattice strain according to charging voltage of the cathode prepared according to Example 2.

[Mode for Carrying out Invention]

Embodiments of the present disclosure provide a cathode active material including a lithium metal oxide, a cathode including the same, and a lithium secondary battery.

Hereinafter, the embodiments of the present disclosure will be described in detail. However, these embodiments are merely examples, and the present disclosure is not limited to the specific embodiments described as example.

<Cathode for a **lithium** secondary battery>

A cathode for a lithium secondary battery according to exemplary embodiments (hereinafter, also abbreviated as a "cathode") may include a cathode active material for a lithium secondary battery (hereinafter, also abbreviated as a "cathode active material"). For example, the cathode may include a cathode active material layer formed by applying a cathode active material to a cathode current collector.

The cathode active material may include a compound capable of reversibly intercalating and deintercalating lithium ions.

In exemplary embodiments, the cathode active material may include a lithium metal oxide. For example, the lithium metal oxide may include nickel (Ni), and may further include other transition metals.

According to exemplary embodiments, the cathode may have a strain value of Equation 1 below.

$$[\text{Equation 1}]$$

$$11.5x-7.9 \leq Q \leq 11.5x-7.5$$

In Equation 1 above, x represents the content of the nickel. For example, x may represent the content (x moles) of nickel per 1 mole based on the total metal excluding lithium in the lithium metal oxide. The term "content" or "concentration" as used herein may refer to the number of moles or the molar ratio of any metal in the lithium metal oxide.

Q may represent the maximum value among the lattice strains measured according to voltage within a voltage range of 3.0 V to 4.3 V for a half-coin cell including the cathode for a lithium secondary battery and a lithium counter electrode.

In one embodiment, the half-cell may be a 2032 type cell that uses the lithium metal oxide as a cathode, and also uses lithium metal as an anode.

Each of the lattice strains may be 1/4 of the slope of a straight line obtained by plotting a diffraction angle $\theta$ (rad) and a full width at half maximum $\beta$ (rad) of the XRD peaks of the lithium metal oxide, obtained by XRD analysis at each measurement voltage, on a coordinate plane having a horizontal axis of $\sin\theta$ and a vertical axis of $\beta\cos\theta$.

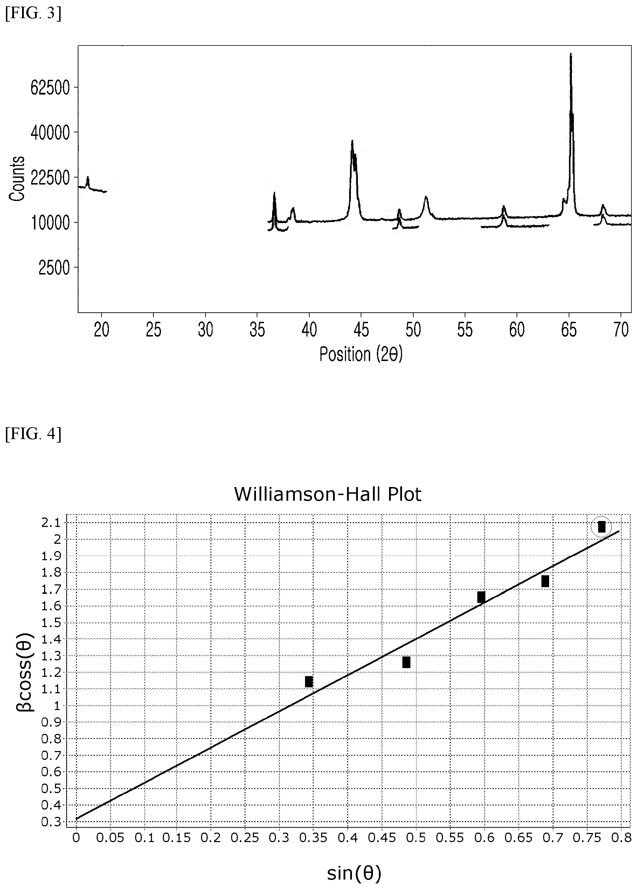

FIGS. 3 and 4 are exemplary graphs illustrating a method of applying the Williamson-Hall method to values obtained by XRD analysis in exemplary embodiments.

FIG. 3 is a graph illustrating an XRD profile of the cathode. Referring to FIG. 3, XRD peaks may be obtained by X-ray diffraction (XRD) analysis.

According to exemplary embodiments, the lattice strain of the cathode may be obtained from the XRD profile of the cathode measured by XRD analysis.

For example, the lattice strain may be defined as a 1/4 value of the slope of a straight line plotted with $\sin\theta$ as the horizontal axis and $\beta\cos\theta$ as the vertical axis. Here, $\beta$ may represent the full width at half maximum (FWHM) (rad) of the corresponding peak obtained by XRD analysis, and $\theta$ may represent the diffraction angle (rad) of the corresponding peak.

In some embodiments, $\beta$ may use a full width at half maximum corrected for equipment-derived values. In one embodiment, Si may be used as a standard material to reflect the equipment-derived values. In this case, by plotting the full width at half maximum profile over the entire $2\theta$ range of Si, the equipment-derived full width at half maximum may be expressed as a function of $2\theta$. Thereafter, a value corrected by subtracting the equipment-derived full width at half maximum value at the corresponding $2\theta$ obtained from the function may be used as $\beta$, and the corrected $\beta$ may be used in the calculation.

For example, the XRD analysis may be performed in a 2θ range of 10° to 75° using Cu-Kα rays having a Kα1 wavelength of 1.540598Å as a light source for the cathode.

According to exemplary embodiments, the lattice strain (η) may be calculated from the XRD profile of the cathode measured by the XRD analysis using Equation 2 below. Equation 2 below is derived from the Williamson-Hall equation.

[Equation 2]

$$\beta\cos\theta = 4\eta\sin\theta + 0.9\lambda/D$$

In Equation 2, β represents the full width at half maximum of the corresponding peak obtained by XRD analysis, θ represents the diffraction angle (rad), η represents the lattice strain (dimensionless), λ represents the X-ray wavelength (Å), and D represents the crystallite size (Å).

FIG. 4 is a graph illustrating a plot of Equation 2 for the cathode.

Referring to FIG. 4, the measured values obtained from the XRD profile of the cathode may be substituted into Equation 2, and the slope (4η) may be obtained by linear regression analysis to calculate the lattice strain (η).

The lattice strain may be measured at each voltage section within a voltage range of 3.0 V to 4.3 V. For example, while charging or discharging the half-cell within the range of 3.0 V to 4.3 V, the XRD profile of the cathode may be measured at a time resolution of 12.5 min/scan, and the lattice strain values according to the voltage may be obtained from the measured XRD profile and the voltage at the time point when the XRD profile was measured.

In one embodiment, the lattice strains may be measured at intervals of 0.1 V, or intervals of 0.3 V, 0.2 V, 0.05 V, 0.01 V, 0.005 V, and 0.001 V within the voltage range of 3.0 V to 4.3 V.

The lattice strain may refer to a stress generated within the structure as lithium enters and exits lithium metal oxide particles during charging and discharging.

For example, when lithium is partially released, a nano domain having a normal vector tilted by 1 degree (°) or less relative to the normal vector of a main domain within the crystal structure may be formed, which may generate stress.

In addition, when the lithium content varies by domain within the crystal structure during repeated charging and discharging, each domain may have a different lattice constant. Therefore, domains having different lattice constants may become adjacent to each other, which may generate stress.

According to exemplary embodiments, when the maximum value (Q) of the lattice strains measured by the above-described method satisfies Equation 1, the stability of the crystal structure within the cathode may be enhanced. Therefore, particle cracking at boundary regions between crystal grains or between particles may be prevented. Accordingly, gas generation in high-temperature environments and/or during charging and discharging may be prevented, thereby improving the cycle life characteristics of the secondary battery.

According to exemplary embodiments, the content (x) of nickel in the lithium metal oxide may be 0.8 mol or more based on 1 mole of the total metal excluding lithium.

For example, Ni may enhance the output and capacity of the lithium secondary battery. Thereby, by employing a high content (0.80≤x) of nickel in the lithium metal oxide, a cathode and a lithium secondary battery having higher output and higher capacity may be provided.

However, when the content of Ni increases, a change in the lattice size may occur depending on the voltage section during charging and discharging of the lithium secondary battery. Therefore, the growth of microstrain within the crystal structure may increase, and oxygen release from the structure may occur due to the microstrain.

For example, in a high-Ni composition including Ni at 80 mol% or more among transition metals, a significant phase change from H2 (hexagonal) to H3 (hexagonal) may occur depending on the change in the voltage section. Accordingly, the lattice constant and lattice volume may decrease, causing the lattice structure within the particles to collapse, and particle cracks and oxygen release may occur. In addition, side reactions and gas generation may occur due to the released oxygen.

The cathode active material according to exemplary embodiments may satisfy a predetermined relationship between the maximum value of the lattice strains according to the change in the charging voltage and the Ni content. Accordingly, even if Ni is included in a high content, the lithium metal oxide particles may be crystallographically and structurally stabilized within the operating voltage range of the secondary battery.

In one embodiment, when the strain (Q) value of the lithium metal oxide is less than 11.5x - 7.9, the capacity of the lithium secondary battery may decrease in the crystal structure, and the output may be reduced.

In one embodiment, when the strain (Q) value of the lithium metal oxide exceeds 11.5x - 7.5, changes in the crystal structure (e.g., lattice size or crystal phase) during charging and discharging may be accelerated. Therefore, oxygen release from the crystal structure may be accelerated, resulting in an increase in gas generation. In addition, the cycle characteristics and high-temperature stability of the lithium secondary battery may be reduced.

In some embodiments, the lattice strain of the cathode may be measured while charging or discharging the half-cell within a voltage range of 3.0 V to 4.3 V. For example, the lattice strain may be measured using an in-situ XRD analysis method, and may be measured simultaneously with the charging and discharging of the half-cell. Therefore, changes in the lattice structure during charging and discharging within the above-described voltage range may be accurately measured.

Therefore, the lattice strain value of the cathode may be calculated whenever the voltage of the secondary battery changes (increases or decreases). For example, changes in the lattice structure during charging or discharging may be measured at intervals of 0.01 V or 0.001 V.

Accordingly, from strain value (Q) of the lithium metal oxide, changes in the lattice or crystal structure that may occur during charging or discharging of the secondary battery may be predicted. In addition, by controlling the strain value obtained during the charging or discharging process, the operational stability of the lithium secondary battery may be further enhanced within the overall operating voltage range.

In one embodiment, the charging and discharging may be performed at a C-rate of 0.1C.

In some embodiments, each of the lattice strains may be obtained by plotting the diffraction angle ($\theta$) and the full width at half maximum ($\beta$) of all XRD peaks appearing in the $2\theta$ ranges of 15° to 20°, 35° to 40°, 45° to 50°, 55° to 60°, and 65° to 70° on the coordinate plane.

For example, each of the lattice strains may be obtained by plotting the diffraction angle ($\theta$) and the full width at half maximum ($\beta$) of all XRD peaks of (003), (101), (105), (107) and (113) planes of the lithium metal oxide on the coordinate plane.

The (003), (101), (105), (107) and (113) planes of the lithium metal oxide may be planes related to the lattice structure and crystallinity. By selecting the XRD peaks of the planes described above among the XRD peaks of the lithium metal oxide and calculating the strain (Q) according to Equation 1, the structural stability of the lithium metal oxide may be further enhanced.

In some embodiments, the maximum value (Q) of the lattice strains may be measured at a voltage of less than 4.3 V.

For example, the lattice constant may have the smallest value at the end of the charge, and thus the lattice structure may undergo the greatest change at 4.3 V. However, the maximum value of the lattice strain may be observed in a region where the phase change is most significant, rather than at the end of the charge, and may be measured at, for example, a voltage less than 4.3 V.

By measuring the lattice strain, which directly affects the charge/discharge performance of the lithium secondary battery, rather than the lattice constant or lattice structure, the structural stability and the degree of oxygen release in the cathode active material may be quantified and controlled. Therefore, the amount of gas generated from the cathode may be compared or predicted without direct measurement in the assembled cell.

In one embodiment, the maximum value (Q) of the lattice strains may be measured at a voltage of 4.0 V or more and less than 4.3 V.

In some embodiments, the lithium metal oxide may have a form of a single particle, a secondary particle, or a mixture thereof. The single particle and the secondary particle may be distinguished based on the morphology of the particle. For example, the secondary particle and the single particle may be identified based on cross-sectional images of the particles obtained using a scanning electron microscope (SEM).

The secondary particle may refer to a particle in which a plurality of primary particles are aggregated and observed or regarded as substantially one particle. For example, in the case of the secondary particles, the boundaries of the primary particles may be observed in the SEM cross-sectional images.

In one embodiment, the secondary particles may be aggregated with greater than 10, 30 or more, 50 or more, or 100 or more primary particles.

The single particle may refer to a monolithic particle that is not an aggregate. For example, in the case of the single particle, unlike the secondary particle, the boundaries of the primary particles may not be observed in the SEM cross-sectional images.

In some embodiments, the lithium metal oxide particles may have a median particle diameter (D50) of 0.5 $\mu$m to 35 $\mu$m. In one embodiment, D50 may be 1 $\mu$m to 35 $\mu$m, 3 $\mu$m to 30 $\mu$m, or 5 $\mu$m to 10 $\mu$m. The "median particle diameter (D50)" may refer to the particle diameter at a cumulative volume fraction of 50% in the particle size distribution obtained by accumulating the particles in order of increasing particle diameter.

For example, if the median particle diameter of the lithium metal oxide particles is less than 0.5 $\mu$m, the mechanical properties and structural stability of the particles may be relatively reduced, resulting in deterioration in the cycle characteristics of the lithium secondary battery. For example, if the average particle size of the lithium metal oxide particles exceeds 35 $\mu$m, the migration distance of lithium ions may become longer as the particle size increases, and the capacity characteristics and output characteristics of the lithium secondary battery may be relatively deteriorated.

In some embodiments, each of the lithium metal oxide particles may include a compound represented by Formula 1 below.

[Formula 1] $Li_aNi_xM_bO_2$

In Formula 1 above, x, a and b may satisfy $0.8 \leq x \leq 0.94$, $0.95 \leq a \leq 1.05$ and $0.06 < b \leq 0.2$, and M may be at least one selected from the group consisting of B, Al, Ti, V, Mn, Co, Zn, Y, Nb, Zr, Mo, Sn, Mg, Sr, Ba and W.

The chemical structure represented by Formula 1 shows a bonding relationship between elements included in the lattice structure or crystal structure of the cathode active material, and does not exclude other additional elements. For example, M may be provided as a main active element of the cathode active material. Here, it should be understood that Formula 1 is provided to express the bonding relationship between the main active elements, and is a formula encompassing the introduction and substitution of the additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form a bond, and it should be understood that this case is also included within the chemical structure range represented by Formula 1.

The auxiliary element may include, for example, at least one selected from the group consisting of Na, Ca, Hf, Ta, Cr, Fe, Cu, Ag, Ga, C, Si, Ra, P and S. The auxiliary element may also act as an auxiliary active element which contributes to the capacity/output activity of the cathode active material, for example, together with Co, Ni or Mn.

In some embodiments, x in Formula 1 above may be 0.83 to 0.94, and for example, $0.88 \leq x \leq 0.94$. Within the above range, the content of nickel may increase, thereby further enhancing the energy density and output of the lithium secondary battery. In addition, since the cathode has a strain value (Q) satisfying Equation 1, even when the content of nickel is increased, the lithium secondary battery may exhibit improved cycle characteristics, as well as thermal and chemical stability.

In some embodiments, the lithium metal oxide may have a layered crystal structure belonging to an R-3m space group.

For example, the lithium metal oxide may have a hexagonal-$NaFeO_2$ structure belonging to the R-3m space group, in which Li layers and oxide layers including at least one metal element other than Li are alternately and continuously stacked.

A transition metal precursor (e.g., a Ni-Co-Mn precursor) for preparing the lithium metal oxide may be prepared by a co-precipitation reaction.

The above-described transition metal precursor may be prepared by a co-precipitation reaction of metal salts. The metal salts may include nickel salts, manganese salts and cobalt salts.

Examples of the nickel salt may include nickel sulfate, nickel hydroxide, nickel nitrate, nickel acetate, and a hydrate thereof, etc. Examples of the manganese salt may include manganese sulfate, manganese acetate, and a hydrate thereof, etc. Examples of the cobalt salt may include cobalt sulfate, cobalt nitrate, cobalt carbonate, and a hydrate thereof, etc.

The metal salts may be mixed with a precipitant and/or a chelating agent in a ratio that satisfies the content of each metal or the concentration ratios described with reference to Formula 1 to prepare an aqueous solution. The aqueous solution may be subjected to co-precipitation in a reactor to prepare the transition metal precursor.

The precipitant may include an alkaline compound such as sodium hydroxide (NaOH), sodium carbonate ($Na_2CO_3$) and the like. The chelating agent may include, for example, ammonium hydroxide (e.g., $NH_3H_2O$), ammonium carbonate (e.g., $NH_3HCO_3$) and the like.

The temperature of the above-described co-precipitation reaction may be adjusted, for example, to a range of about 30°C to 70°C. The reaction time may be adjusted to a range of about 24 to 60 hours.

For example, a transition metal precursor may be reacted with a lithium precursor to prepare lithium metal composite particles. The lithium precursor compound may include, for example, lithium carbonate, lithium nitrate, lithium acetate, lithium oxide, lithium hydroxide, etc. These may be used alone or in combination of two or more thereof.

Thereafter, a (predetermined) heat treatment process may be performed on the lithium metal composite particles to increase the crystallinity of the metal particles. In one embodiment, the heat treatment may be performed at a temperature in a range of about 600°C to 1000°C.

In one embodiment, lithium impurities or unreacted precursors may be removed through a washing process for lithium metal composite particles. In another embodiment, the washing process may be omitted. In one embodiment, a post-treatment or surface treatment process may be further performed on the lithium metal composite particles.

In one example, when the cathode active material includes a high content of Ni, a low calcination temperature is required, and the content of residual lithium present on the surface may increase. The residual lithium may react with the electrolyte to generate gas, and may lower the energy density of the cathode. When a washing process is performed to remove the residual lithium, the structure of the cathode active material may become unstable, and oxygen may be released from the lattice structure or gas generation may occur.

According to exemplary embodiments, the lithium metal oxide may have a stable structure throughout the entire operating voltage range, thereby preventing collapse and deterioration of the lattice structure during operation of the battery. Therefore, by employing the lithium metal oxide as a cathode active material, the capacity and output characteristics of the lithium secondary battery may be improved, while the capacity retention rate and gas generation amount may also be enhanced.

For example, the strain (Q) of the above-described the lithium metal oxide may vary depending on the co-precipitation reaction time, reaction temperature, heat treatment temperature, washing process, surface treatment process and the like.

**<Lithium secondary battery>**

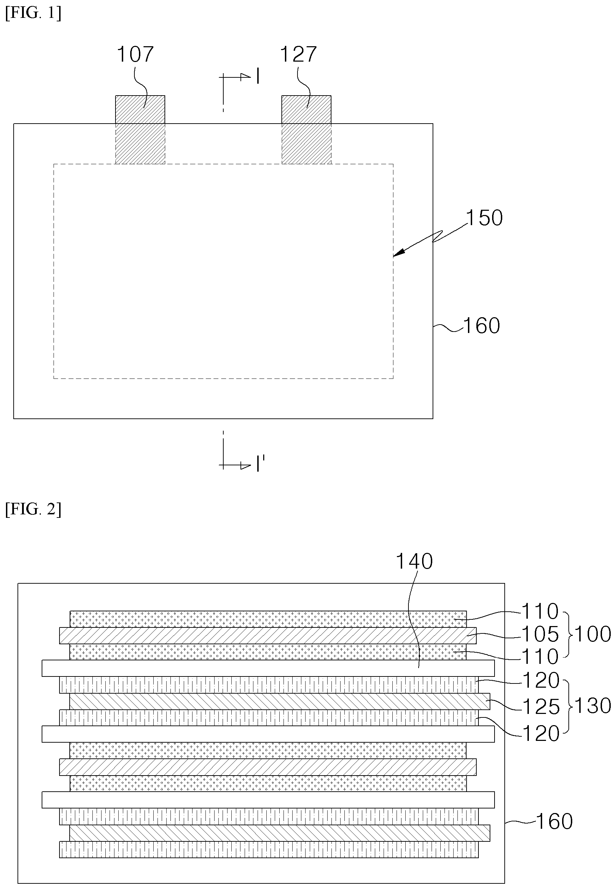

Hereinafter, a lithium secondary battery including the above-described cathode including the cathode active material for a lithium secondary battery will be described with reference to FIGS. 1 and 2.

Referring to FIGS. 1 and 2, the lithium secondary battery may include a cathode 100 including a cathode active material which includes the above-described lithium metal oxide particles, and an anode 130 disposed opposite to the cathode 100.

The cathode 100 may include a cathode active material layer 110 formed by applying the cathode active material including the above-described lithium metal oxide particles to a cathode current collector 105.

For example, a cathode slurry may be prepared by mixing the cathode active material with a binder, a conductive material, and/or a dispersant in a solvent, followed by stirring the same. The prepared cathode slurry may be applied to the cathode current collector 105, then dried and pressed to prepare the cathode 100.

The cathode current collector 105 may include stainless steel, nickel, aluminum, titanium, or an alloy thereof. The cathode current collector 105 may also include aluminum or stainless steel having a surface treated with carbon, nickel, titanium, or silver.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as a binder for forming the cathode. In this case, an amount of the binder for forming the cathode active material layer 110 may be reduced and an amount of the cathode active material may be relatively increased. Thereby, the output and capacity of the secondary battery may be improved.

The conductive material may be included to facilitate electron transfer between the active material particles. For example, the conductive material may include carbon-based conductive materials such as graphite, carbon black, graphene, or carbon nanotubes and/or metal-based conductive materials, including perovskite materials, such as tin, tin oxide, titanium oxide, $LaSrCoO_3$, and $LaSrMnO_3$, etc.

The anode 130 may include an anode current collector 125 and an anode active material layer 120 formed by coating at least one surface of the anode current collector 125 with an anode active material.

The anode active material may include a material capable of intercalating and deintercalating lithium ions. For example, carbon-based materials such as crystalline carbon, amorphous carbon, carbon composite, carbon fiber, etc.; a lithium alloy; silicon or tin may be used. Examples of the amorphous carbon may include hard carbon, cokes, mesocarbon microbead (MCMB) calcined at 1500°C or lower, mesophase pitch-based carbon fiber (MPCF) or the like. Examples of the crystalline carbon may include graphite-based carbon such as natural graphite, graphite cokes, graphite MCMB, graphite MPCF or the like. Other elements included in the lithium alloy may include, for example, aluminum, zinc, bismuth, cadmium, antimony, silicon, lead, tin, gallium, indium or the like.

The anode current collector 125 may include, for example, gold, stainless steel, nickel, aluminum, titanium, copper, or an alloy thereof. For example, the anode current collector 125 may include copper or a copper alloy.

In some embodiments, a slurry may be prepared by mixing the anode active material with a binder, a conductive material and/or a dispersant in a solvent, followed by stirring the same. The anode current collector 120 may be coated with the slurry, then dried and compressed to prepare the anode 130.

As the binder and the conductive material, materials which are substantially the same as or similar to the above-described materials may be used. In some embodiments, a binder for forming an anode may include, for example, an aqueous binder such as styrene-butadiene rubber (SBR) to ensure compatibility with a carbon-based active material, and may be used together with a thickener such as carboxymethyl cellulose (CMC).

A separation membrane 140 may be interposed between the cathode 100 and the anode 130. The separation membrane 140 may include a porous polymer film made of a polyolefin polymer such as ethylene homopolymer, propylene homopolymer, ethylene/butene copolymer, ethylene/hexene copolymer, ethylene/methacrylate copolymer. The separation membrane 140 may include a nonwoven fabric made of glass fibers having a high melting point, polyethylene terephthalate fibers, etc.

According to exemplary embodiments, an electrode cell is defined by the cathode 100, the anode 130, and the separation membrane 140, and a plurality of electrode cells are stacked to form, for example, a jelly roll type electrode assembly 150. For example, the electrode assembly 150 may be formed by winding, laminating, folding, etc. the separation membrane 140.

The electrode assembly 150 may be housed in an outer case 160 together with an electrolyte to define the lithium secondary battery. According to exemplary embodiments, a non-aqueous electrolyte may be used as the electrolyte.

The non-aqueous electrolyte may include a lithium salt of an electrolyte and an organic solvent. The lithium salt is represented by, for example, $Li^+X^-$, and as an anion $(X^-)$ of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(F SO_2)_2N^-$, $CF_3CF_2$ $(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfuroxide, acetonitrile, dimethoxyethane, diethoxyethane, vinylene carbonate, sulfolane, gamma-butyrolactone, propylene sulfite and tetrahydrofuran, etc. may be used. These may be used alone or in combination of two or more thereof.

As illustrated in FIG. 1, electrode tabs (a cathode tab and an anode tab) protrude from the cathode current collector 105 and the anode current collector 125, respectively, which belong to each electrode cell, and may extend to one side of the outer case 160. The electrode tabs may be fused together with the one side of the outer case 160 to form electrode leads (a cathode lead 107 and an anode lead 127) that extend or are exposed to an outside of the outer case 160.

The lithium secondary battery may be manufactured, for example, in a cylindrical shape using a can, a prismatic shape, a pouch shape or a coin shape.

Hereinafter, embodiments of the present invention will be further described with reference to specific experimental examples. However, the following examples and comparative examples included in the experimental examples are only given for illustrating the present invention and those skilled in the art will obviously understand that various alterations and modifications are possible within the scope and spirit of the present invention. Such alterations and modifications are duly included in the appended claims.

## **Examples and Comparative Examples**

### **Example 1**

Preparation of lithium metal oxide particles

$NiSO_4$, $CoSO_4$ and $MnSO_4$ were mixed to satisfy a molar ratio shown in Table 2 below, by using distilled water from which dissolved oxygen had been removed by bubbling $N_2$ for 24 hours. The mixed solution was introduced into a reactor at 55 °C, and NaOH as a precipitant and $NH_3H_2O$ as a chelating agent were added thereto, followed by performing co-precipitation for 36 hours to obtain $Ni_{0.88}Co_{0.09}Mn_{0.03}(OH)_2$ as a transition metal precursor. The obtained precursor was dried at 80 °C for 12 hours, and then dried again at 110 °C for 12 hours.

Lithium hydroxide and the transition metal precursor were added to a dry high-speed mixer in a ratio of 1.05:1, and uniformly mixed for 5 minutes. The mixture was placed in a calcination furnace, heated to 950°C at a heating rate of 2°C/min, maintained at 950°C for 5 hours, and then naturally cooled to 900°C and maintained for 5 hours. Oxygen was continuously supplied at a flow rate of 10 mL/min during the heating and maintenance. After completion of the calcination, the mixture was naturally cooled to room temperature, then pulverized and classified to prepare lithium metal oxide particles ($LiNi_{0.88}Co_{0.09}Mn_{0.03}O_2$) having an R-3m crystal structure.

Lithium metal oxide introduction and preliminary coating

The lithium metal oxide particles prepared according to the preparative example were mixed with 0.3 mol% of $Al_2O_3$ powder based on the total number of moles of the lithium metal oxide particles to form a preliminary coating layer on the surface of the lithium metal oxide particles.

Mixing and calcination of sulfur-containing compound aqueous solution

A sulfur-containing compound aqueous solution was introduced into the preliminarily coated lithium metal oxide particles and then mixed.

In this case, the sulfur-containing compound aqueous solution was prepared by introducing 1.5 wt% of

ammonium sulfate $((NH_4)_2SO_4)$ powder based on the total weight of the lithium metal oxide particles into 8 wt% of pure water based on the total weight of the lithium metal oxide particles.

The obtained mixture was placed in a calcination furnace, and oxygen was supplied at a flow rate of 10 mL/min while the temperature was increased to 400 °C at a heating rate of 2 °C/min. Then, the temperature was maintained at 400 °C for 8 hours. After calcination, the resulting calcined product was classified using a 325 mesh sieve to obtain a cathode active material.

### Example 2

A cathode active material was obtained in the same manner as in Example 1, except that 1 wt% of ammonium sulfate $((NH_4)_2SO_4)$ powder based on the total weight of the lithium metal oxide particles was introduced into 8 wt% of pure water based on the total weight of the lithium metal oxide particles.

### Example 3

A cathode active material was obtained in the same manner as in Example 1, except that 0.5 wt% of ammonium sulfate $((NH_4)_2SO_4)$ powder based on the total weight of the lithium metal oxide particles was introduced into 8 wt% of pure water based on the total weight of the lithium metal oxide particles.

### Example 4

A cathode active material was obtained in the same manner as in Example 1, except that $LiNi_{0.80}CO_{0.10}Mn_{0.10}O_2$ was used as the lithium metal oxide particles.

### Example 5

A cathode active material was obtained in the same manner as in Example 4, except that 1 wt% of ammonium sulfate $((NH_4)_2SO_4)$ powder based on the total weight of the lithium metal oxide particles was introduced into 8 wt% of pure water based on the total weight of the lithium metal oxide particles.

### Example 6

A cathode active material was obtained in the same manner as in Example 4, except that 0.5 wt% of ammonium sulfate $((NH_4)_2SO_4)$ powder based on the total weight of the lithium metal oxide particles was introduced into 8 wt% of pure water based on the total weight of the lithium metal oxide particles.

### Example 7

A cathode active material was obtained in the same manner as in Example 1, except that $LiNi_{0.94}CO_{0.05}Mn_{0.01}O_2$ was used as the lithium metal oxide particles.

### Example 8

A cathode active material was obtained in the same manner as in Example 7, except that 1 wt% of ammonium sulfate $((NH_4)_2SO_4)$ powder based on the total weight of the lithium metal oxide particles was introduced into 8 wt% of pure water based on the total weight of the lithium metal oxide particles.

### Example 9

A cathode active material was obtained in the same manner as in Example 7, except that 0.5 wt% of ammonium sulfate $((NH_4)_2SO_4)$ powder based on the total weight of the lithium metal oxide particles was introduced into 8 wt% of pure water based on the total weight of the lithium metal oxide particles.

### Comparative Example 1

Lithium metal oxide particles were introduced into 100 wt% of pure water based on the total weight of the lithium metal oxide particles prepared according to the preparative example, stirred for 10 minutes, and then the filtered particles were dried at 170°C for 12 hours. The dried particles were mixed with 0.25 wt% of boric acid $(H_3BO_3)$ based on the total weight of the lithium metal oxide particles, and calcined at 200 to 300°C to obtain a cathode active material.

## Comparative Example 2

A cathode active material was obtained by leaving the lithium metal oxide particles prepared according to the preparative example without subjecting them to a post-treatment step.

## Comparative Example 3

A cathode active material was obtained in the same manner as in Comparative Example 1, except that $LiNi_{0.80}CO_{0.10}Mn_{0.10}O_2$ was used as the lithium metal oxide particles.

## Comparative Example 4

A cathode active material was obtained in the same manner as in Comparative Example 2, except that $LiNi_{0.80}CO_{0.10}Mn_{0.10}O_2$ was used as the lithium metal oxide particles.

## Comparative Example 5

A cathode active material was obtained in the same manner as in Comparative Example 1, except that $LiNi_{0.80}CO_{0.10}Mn_{0.10}O_2$ was used as the lithium metal oxide particles.

## Comparative Example 6

A cathode active material was obtained in the same manner as in Comparative Example 2, except that $LiNi_{0.94}CO_{0.05}Mn_{0.01}O_2$ was used as the lithium metal oxide particles.

## Measurement of residual lithium

2.5 g of cathode active materials according to each of the examples and comparative examples were placed in a 250 mL beaker, 100 g of deionized water was added thereto, then a magnetic bar was inserted, and the mixture was stirred at 300 rpm for 10 minutes. Thereafter, the mixture was filtered using a vacuum flask, and 100 g of the filtrate was collected. The collected solution was placed in an auto titrator vessel and automatic titration was performed with 0.1 N HCl according to the Wader Method to measure the contents of $Li_2CO_3$ and LiOH in the solution.

## Measurement of strain (Q)

### 1) Manufacture of half-coin cell

In-situ XRD coin cells were manufactured using the cathode active materials according to each of the examples and comparative examples, and the strain (Q) was measured by XRD analysis. The coin cell for in-situ XRD was manufactured as a half-coin cell (2032 type) using the lithium metal oxide particles as a cathode and Li metal as a counter electrode.

Specifically, the cathode slurry was prepared by mixing the cathode active material, Denka Black as a conductive material, and PVDF as a binder in a mass ratio of 93:5:2. The cathode slurry was applied to an aluminum current collector, then dried and pressed to prepare a cathode. After pressing, the density of the cathode was adjusted to 3.3 g/cc.

A separation membrane (polyethylene, thickness: 13 $\mu$m) was interposed between the cathode and the anode to form an electrode cell. The electrode cell was placed in an outer case and an electrolyte was injected, and the assembly was aged for 12 hours or more to allow the electrolyte to impregnate the electrodes. The electrolyte was prepared by dissolving 1 M $LiPF_6$ in a mixed solvent of EC/EMC (30/70; volume ratio).

### 2) Measurement of lattice strain value

A hole having a diameter of $10\pi$ was drilled into the outer surface of the outer case in contact with the cathode, and the hole was sealed with Kapton film to prevent leakage of the electrolyte inside the cell. Thereafter, XRD analysis was performed on the cathode active material to measure the lattice strain value. X-rays were passed through the hole and the aluminum substrate to cause diffraction in the cathode active material particles, and the resulting signal was read by a detector, thereby enabling real-time confirmation of structural changes in the cathode active material particles.

The half-coin cell was charged (CC-CV 0.1C, 4.3V, 0.005C cut-off) and discharged (CC 0.1C, 3.0V cut-off) to measure the initial discharge amount. Then, the half-coin cell was charged at 3.0 V (CC-CV 0.1C, 4.3V, 0.005C cut-off) and the lattice strain of the cathode active material was measured according to the voltage at a time resolution of 12.5 min/scan. Equation 2 was used to calculate the lattice strain value, and for deriving Equation 2, the diffraction angles and full width at half maximum values of the XRD peaks of the (003), (101), (105), (107) and (113) planes of the cathode active material particles were selected.

FIG. 3 is a graph illustrating an XRD profile at a specific voltage of the cathode prepared according to Example 2. FIG. 4 is a graph illustrating a plot according to Equation 2 for the cathode prepared according to Example 2 at the above voltage.

Thereafter, the maximum value (Q) among the lattice strains measured according to the voltage was calculated and is shown in Table 2 below.

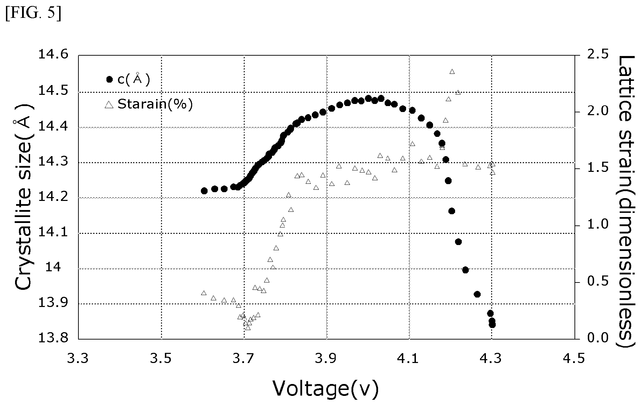

FIG. 5 is a graph illustrating the crystallite size (c) and lattice strain according to the charging voltage of the cathode prepared according to Example 2. Referring to FIG. 5, the strain (Q) of the lithium metal oxide particles of Example 2 was measured to be 2.42.

Example 2 contained 0.88 mol of nickel per 1 mole based on the total metal excluding lithium, and the minimum value of Equation 1 for Example 2 was 2.22, and the maximum value was 2.62.

Specific XRD analysis equipment and conditions are as listed in Table 1 below, and the HighScore program was used to calculate the lattice strain.

[TABLE 1]

| XRD (X-Ray Diffractometer) EMPYREAN | |
|---|---|
| Maker | PANalytical |
| Anode material | Cu |
| K-Alpha1 wavelength | 1.540598 Å |
| Generator voltage | 45 kV |
| Tube current | 40 mA |
| Scan Range | 10 - 80° |
| Scan Step Size | 0.0065° |
| Divergence slit | 1/4° |
| Antiscatter slit | 1° |

[TABLE 2]

| | Ni/Co/Mn (molar ratio) | Residual lithium (ppm) | Strain max (Q) |
|---|---|---|---|
| Example 1 | 88/9/3 | 4490 | 2.24 |
| Example 2 | 88/9/3 | 4550 | 2.42 |
| Example 3 | 88/9/3 | 4620 | 2.55 |
| Example 4 | 80/10/10 | 3130 | 1.31 |
| Example 5 | 80/10/10 | 3210 | 1.55 |
| Example 6 | 80/10/10 | 3280 | 1.65 |
| Example 7 | 94/5/1 | 5320 | 2.94 |
| Example 8 | 94/5/1 | 5410 | 3.0 |
| Example 9 | 94/5/1 | 5490 | 3.11 |
| Comparative Example 1 | 88/9/3 | 4530 | 2.74 |
| Comparative Example 2 | 88/9/3 | 6480 | 1.99 |
| Comparative Example 3 | 80/10/10 | 3120 | 1.90 |
| Comparative Example 4 | 80/10/10 | 5560 | 0.99 |
| Comparative Example 5 | 94/5/1 | 5380 | 3.72 |

(continued)

| | Ni/Co/Mn (molar ratio) | Residual lithium (ppm) | Strain max (Q) |
|---|---|---|---|
| Comparative Example 6 | 94/5/1 | 7710 | 2.55 |

**Experimental Example**

(1) Measurement of initial capacity of half-coin cell (2 mAh)

After manufacturing the half-coin cell, the cell was charged (CC-CV 0.1C, 4.3V, 0.005C cut-off) and discharged (CC 0.1C, 3.0V cut-off) for the first time, and the initial discharge amount was measured.

(2) Manufacture of lithium secondary battery (20 Ah)

A secondary battery was manufactured using the prepared lithium metal oxide particles as a cathode active material. Specifically, the cathode active material, Denka Black as a conductive material, and PVDF as a binder were mixed in a mass ratio of 97:2:1 to prepare a cathode slurry. Thereafter, the cathode slurry was applied to an aluminum current collector, then dried and pressed to prepare a cathode. After pressing, the target electrode density of the cathode was adjusted to 3.69 g/cc.

An anode slurry was prepared, including 93 wt% of natural graphite as an anode active material, 5 wt% of KS6, a flake-type conductive material as a conductive material, 1 wt% of styrene-butadiene rubber (SBR) as a binder, and 1 wt% of carboxymethyl cellulose (CMC) as a thickener. The anode slurry was applied to a copper foil, then dried, and pressed to prepare an anode.

14 cathodes and 15 anodes prepared as described above were respectively notched into a predetermined size and stacked, then an electrode cell was fabricated by interposing a separator (polyethylene, thickness: 12 $\mu$m) between the cathode and the anode. Thereafter, tap parts of the cathode and the anode were welded, respectively. The assembly of the welded cathode/separator/anode was placed into a pouch, and three sides of the pouch were sealed, leaving one side open for electrolyte injection. At this time, a portion having the electrode tab was included in the sealing part. After injecting the electrolyte through the remaining open side except for the sealing part, the remaining open side was also sealed, followed by allowing it to be impregnated for 12 hours or more.

A solution, prepared by dissolving 1 M $LiPF_6$ in a mixed solvent of EC/EMC (25/75; volume ratio) and further adding 1 wt% of vinylene carbonate (VC) and 0.5 wt% of 1,3-propenesultone (PRS), was used as the electrolyte.

(3) Measurement of cycle life (capacity retention rate) at 60°C

The lithium secondary batteries of the above-described examples and comparative examples were charged (CC-CV 0.1C, 4.2V, 0.05C cut-off) and discharged (CC 0.1C, 2.5V), and then the initial discharge capacity was measured. Thereafter, the cell was charged (CC-CV 0.1C, 4.2V, 0.05C cut-off) and discharged by 3% depth of discharge (DOD) to prepare a cell with SOC of 97%.

The prepared cell was stored in a 60°C constant-temperature chamber, and charged (CC-CV 0.1C 4.2V 0.05C cut-off) and discharged (CC 0.1C 2.5V cut-off) at 16-week point. The discharge capacity was measured, and the capacity retention rate was calculated by determining the percentage (%) of the discharge capacity relative to the initial discharge capacity.

(4) Measurement of high-temperature gas generation and $CO_2$ content in gas

The prepared SOC 97% cell was stored in a 60°C constant-temperature chamber, and the gas generation inside the cell was measured at 4, 8 and 16 weeks. Each cell was placed in a jig designed to match the size of the cell, a pin was inserted through the cell, and the pressure change inside the jig was measured and converted into the amount of gas generated.

At the 16-week point, the gas collected was captured in a cylinder. The cylinder was connected to a gas chromatography-residual gas analyzer (GC-RGA) to analyze the $CO_2$ content (volume ratio) among the total amount of gas.

The evaluation results are shown in Table 3 below.

[TABLE 3]

| | Coin cell | Secondary battery | | | | |
|---|---|---|---|---|---|---|
| | Initial Volume (mAh/g) | Capacity retention rate (%) | Gas generation (ml) | | | CO$_2$ ratio @16 weeks (%) |
| | | | 4 week | 8 week | 16 week | |
| Example 1 | 213 | 92 | 13 | 21 | 34 | 33 |
| Example 2 | 213 | 91 | 19 | 26 | 40 | 38 |
| Example 3 | 215 | 90 | 26 | 29 | 47 | 39 |
| Example 4 | 202 | 96 | 11 | 19 | 21 | 24 |
| Example 5 | 203 | 95 | 13 | 20 | 23 | 25 |
| Example 6 | 202 | 91 | 18 | 21 | 28 | 26 |
| Example 7 | 227 | 85 | 22 | 40 | 59 | 47 |
| Example 8 | 225 | 83 | 25 | 43 | 65 | 48 |
| Example 9 | 226 | 80 | 30 | 46 | 71 | 50 |
| Comparative Example 1 | 214 | 85 | 19 | 33 | 75 | 52 |
| Comparative Example 2 | 209 | 92 | 52 | 75 | 116 | 76 |
| Comparative Example 3 | 205 | 89 | 10 | 22 | 41 | 47 |
| Comparative Example 4 | 197 | 91 | 39 | 58 | 81 | 73 |
| Comparative Example 5 | 225 | 75 | 30 | 54 | 101 | 49 |
| Comparative Example 6 | 219 | 86 | 66 | 87 | 139 | 75 |

Referring to Tables 1 and 2, the cathode active materials prepared according to the examples had strain (Q) values satisfying the range defined by Equation 1, exhibited high initial capacities, and showed improved capacity retention and reduced gas generation.

For example, the cathode active materials containing 0.88 mol of Ni per 1 mole based on the total metal had a Q value of 2.22 to 2.62, the lithium metal oxide particles containing 0.80 mol of Ni had a Q value of 1.3 to 1.7, and the cathode active material containing 0.94 mol of Ni had a Q value of 2.91 to 3.31.

On the other hand, the comparative examples had Q values outside the range defined by Equation 1, and exhibited reduced initial discharge capacities or deteriorated gas generation and capacity retention. For example, the comparative examples exhibited relatively high gas generation during high-temperature storage and charging and discharging, and gas generation was accelerated as the storage period increased.

Even though the cathode active materials used in the examples and comparative examples had substantially similar residual lithium contents, the examples exhibited a greater reduction in gas generation and improved capacity and output characteristics.

In addition, the gas generated from the secondary batteries according to the examples had a lower CO$_2$ content. CO$_2$ may be generated when oxygen released from the cathode during charging and discharging reacts with a solvent in the electrolyte and is oxidized. Therefore, it can be confirmed that side reactions between the cathode and the electrolyte were reduced in the secondary batteries according to the examples.

## Claims

1.   A cathode for a lithium secondary battery comprising:

a lithium metal oxide containing x moles of nickel (Ni) per 1 mole based on a total metal excluding lithium, wherein the lithium metal oxide has a strain (Q) defined by Equation 1 below:

[Equation 1]

$$11.5x-7.9 \leq Q \leq 11.5x-7.5$$

(in Equation 1 above, x represents a content of the nickel, Q represents the maximum value among lattice strains measured according to voltage within a voltage range of 3.0 V to 4.3 V for a half-cell comprising the cathode for a lithium secondary battery and a lithium counter electrode, and

each of the lattice strains is 1/4 of the slope of a straight line obtained by plotting a diffraction angle $\theta$ (rad) and a full width at half maximum $\beta$ (rad) of XRD peaks of the lithium metal oxide, obtained by XRD analysis at each measurement voltage, on a coordinate plane having a horizontal axis of $\sin\theta$ and a vertical axis of $\beta\cos\theta$).

2. The cathode for a lithium secondary battery according to claim 1, wherein each of the lattice strains is calculated using Equation 2 below:

[Equation 2]

$$\beta\cos\theta=4\eta\sin\theta+0.9\lambda/D$$

(in Equation 2 above, $\beta$ represents the full width at half maximum of the XRD peak, $\theta$ represents the diffraction angle of the XRD peak, $\eta$ represents the lattice strain (dimensionless), $\lambda$ represents an X-ray wavelength (Å) used for XRD analysis, and D represents a crystallite size (Å) of the lithium metal oxide).

3. The cathode for a lithium secondary battery according to claim 1, wherein the content (x) of nickel in the lithium metal oxide is 0.8 mol or more per 1 mole based on the total metal excluding lithium.

4. The cathode for a lithium secondary battery according to claim 3, wherein the lithium metal oxide is represented by Formula 1 below:

[Formula 1]     $LiaNixMbO2$

(in Formula 1 above, x a and b satisfy $0.8 \leq x \leq 0.94$, $0.95 \leq a \leq 1.05$ and $0.06 < b \leq 0.2$, and M is at least one selected from the group consisting of B, Al, Ti, V, Mn, Co, Zn, Y, Nb, Zr, Mo, Sn, Mg, Sr, Ba and W).

5. The cathode for a lithium secondary battery according to claim 4, wherein in Formula 1 above, x is in a range of 0.83 to 0.94.

6. The cathode for a lithium secondary battery according to claim 1, wherein the lattice strains are measured at a time resolution of 12.5 min/scan within the voltage range of 3.0 V to 4.3 V.

7. The cathode for a lithium secondary battery according to claim 1, wherein the maximum value (Q) of the lattice strains is measured at a voltage of less than 4.3 V.

8. The cathode for a lithium secondary battery according to claim 7, wherein the maximum value (Q) of the lattice strains is measured at a voltage of 4.0 V or more and less than 4.3 V.

9. The cathode for a lithium secondary battery according to claim 1, wherein the lattice strains are measured while charging or discharging the half-cell at a C-rate of 0.1C within a voltage range of 3.0 V to 4.3 V.

10. The cathode for a lithium secondary battery according to claim 1, wherein each of the lattice strains is obtained by plotting the diffraction angle ($\theta$) and the full width at half maximum ($\beta$) of all XRD peaks appearing in the $2\theta$ ranges of 15° to 20°, 35° to 40°, 45° to 50°, 55° to 60°, and 65° to 70° on the coordinate plane.

11. The cathode for a lithium secondary battery according to claim 1, wherein each of the lattice strains is obtained by plotting the diffraction angle ($\theta$) and the full width at half maximum ($\beta$) of all XRD peaks of (003), (101), (105), (107) and (113) planes of the lithium metal oxide on the coordinate plane.

12. The cathode for a lithium secondary battery according to claim 1, wherein the lithium metal oxide has a layered crystal structure belonging to an R-3m space group.

13. The cathode for a lithium secondary battery according to claim 1, wherein the lithium metal oxide further comprises cobalt (Co) and manganese (Mn).

14. A lithium secondary battery comprising:

the cathode for a lithium secondary battery according to claim 1; and
an anode disposed opposite to the cathode.

[FIG. 1]

[FIG. 2]

[FIG. 3]

[FIG. 4]

Williamson-Hall Plot

[FIG. 5]

## INTERNATIONAL SEARCH REPORT

| International application No. |
| --- |
| **PCT/KR2023/006615** |

### A. CLASSIFICATION OF SUBJECT MATTER

**H01M 4/525**(2010.01)i; **H01M 4/131**(2010.01)i; **H01M 4/505**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/525(2010.01); H01M 10/052(2010.01); H01M 10/42(2006.01); H01M 4/36(2006.01); H01M 4/485(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극(cathode), 리튬 금속 산화물(lithium metal oxide), XRD, 격자 변형(lattice strain control), 코발트(cobalt), 망간(manganese), Williamson-Hall

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2317602 B1 (SK INNOVATION CO., LTD.) 25 October 2021 (2021-10-25) See paragraphs [0037], [0103] and [0137]-[0148]. | 1,3-5,12-14 |
| Y | | 2,6-11 |
| Y | KR 10-2293046 B1 (SK INNOVATION CO., LTD.) 24 August 2021 (2021-08-24) See paragraphs [0065], [0067], [0116], [0121] and [0125]; and claim 1. | 2,6-11 |
| A | JP 2010-009960 A (SONY CORP.) 14 January 2010 (2010-01-14) See entire document. | 1-14 |
| A | KR 10-2019-0125405 A (UMICORE et al.) 06 November 2019 (2019-11-06) See entire document. | 1-14 |
| A | KR 10-2020-0070647 A (LG CHEM, LTD.) 18 June 2020 (2020-06-18) See entire document. | 1-14 |

☐ Further documents are listed in the continuation of Box C.　　☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **16 August 2023** | **17 August 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/006615**

| Patent document cited in search report | | | Publication date (day/month/year) | Patent family member(s) | | | Publication date (day/month/year) |
|---|---|---|---|---|---|---|---|
| KR | 10-2317602 | B1 | 25 October 2021 | CN | 114597352 | A | 07 June 2022 |
| | | | | CN | 115241414 | A | 25 October 2022 |
| | | | | EP | 4080606 | A1 | 26 October 2022 |
| | | | | US | 11637279 | B2 | 25 April 2023 |
| | | | | US | 2022-0367851 | A1 | 17 November 2022 |
| | | | | US | 2023-0105644 | A1 | 06 April 2023 |
| | | | | US | 2023-0197934 | A1 | 22 June 2023 |
| KR | 10-2293046 | B1 | 24 August 2021 | CN | 113644255 | A | 12 November 2021 |
| | | | | CN | 113644255 | B | 07 April 2023 |
| | | | | CN | 116230922 | A | 06 June 2023 |
| | | | | EP | 3957607 | A1 | 23 February 2022 |
| | | | | US | 11637282 | B2 | 25 April 2023 |
| | | | | US | 2022-0052332 | A1 | 17 February 2022 |
| JP | 2010-009960 | A | 14 January 2010 | None | | | |
| KR | 10-2019-0125405 | A | 06 November 2019 | CN | 110662717 | A | 07 January 2020 |
| | | | | EP | 3589585 | A1 | 08 January 2020 |
| | | | | JP | 2020-510971 | A | 09 April 2020 |
| | | | | JP | 6856763 | B2 | 14 April 2021 |
| | | | | KR | 10-2312238 | B1 | 13 October 2021 |
| | | | | US | 11114662 | B2 | 07 September 2021 |
| | | | | US | 11367872 | B2 | 21 June 2022 |
| | | | | US | 2020-0006762 | A1 | 02 January 2020 |
| | | | | US | 2020-0020944 | A1 | 16 January 2020 |
| | | | | US | 2023-0054397 | A1 | 23 February 2023 |
| | | | | WO | 2018-158078 | A1 | 07 September 2018 |
| KR | 10-2020-0070647 | A | 18 June 2020 | US | 2020-0185713 | A1 | 11 June 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020170093085